# EUROPEAN PATENT APPLICATION

(11) **EP 2 012 219 A1**
(43) Date of publication of application: **07.01.2009**
(21) Application number: 07110570.4
(22) Date of filing: 19.06.2007
(51) Int. Cl.: G06F 3/023, G06F 3/048

(54) **Touch screen keyboard with tactile feedback, and associated method**

(71) Applicant: Research In Motion Limited, Waterloo, Ontario N2L 3W8 (CA)
(72) Inventor: Carmody, Michael, Waterloo, Ontario N2L 3T7 (CA); Dahms, John Frederic Arthur, Waterloo, Ontario N2K 2N1 (CA); Robertson, Ian, Waterloo, Ontario N2J 1H4 (CA)
(74) Representative: Roberts, Gwilym Vaughan

(57) **Abstract**

An electronic device employing a flexible display module overlying a key module enable a virtual key to be positioned on the display module to overlap at least one physical key on the key module and to enable an actuation force applied to a virtual key by the user to be transferred to the at least one physical key to provide an indication of the actuating of the virtual key to a processor of the electronic device.

## Description

### BACKGROUND

### Field

The disclosure relates generally to touchscreens employed as keyboards and, more particularly, to a touch screen that provides positive tactile feedback responsive to an actuation of a virtual key depicted thereon.

### Background Information

Numerous forms of user input devices generally classified as keyboards are well known. With the proliferation of personal computers, personal data assistants, cell phones, and other electronic devices enabling various complex applications, keyboards with numerous keys allowing numeric and/or text entry have become commonplace.

Some keyboards have keys that provide tactile feedback to a user which indicates a successful key actuation. Such positive feedback with each key actuation is known to aid users in rapidly using such keyboards to enter data and carry out other functions, since the user is relieved of having to visually observe each key actuation or using other approaches to be assured that each key actuation is successfully completed. Unfortunately, despite the advantages of providing tactile feedback, the majority of such keyboards suffer the limitation of employing printed legends depicting letters and/or graphical symbols printed directly on the keys to denote a function for each of the keys, and the printed nature of these legends often prevents the keys from being dynamically relabeled to accommodate changes in functions.

Some keyboards providing tactile feedback include mechanical keyboards that employ mechanical switches and provide keycap that move in response to being actuated. The keycaps of the mechanical switches transfer to a user a positive tactile feedback as a result of the movement or "travel" of the keycap between an unactuated position and an actuated position. Other keyboards that provide tactile feedback employ as keys an array of soft metal domes that may be covered with a flexible sheet of material on which legends are printed indicating the locations of the keys. The soft metal domes are collapsible between an undeflected position and a deflected position with a "snap" that can be felt through fingertips (and sometimes heard), thereby providing positive feedback. Still other keyboards providing tactile feedback are so-called "rubber" keyboards that employ a flexible sheet of rubber or plastic with bumps or domes formed therein. Not unlike the aforedescribed soft metal domes, the bumps or domes formed in the flexible sheet are deflectable and may or may not do so with some form of "snap" that might be felt through fingertips.

Other keyboards incorporate a display device depicting virtual keys that may be redrawn with different shapes, sizes and legends, thereby permitting dynamic relabeling of each virtual key. Unfortunately, the majority of such keyboards employ a display device with a rigid surface to which any of a variety of different touch sensors are attached. Although the touch sensors respond to the force of a user actuating the virtual keys, the rigid surface provides no tactile feedback indicating that a key was successfully actuated. This lack of tactile feedback often results in an experience that users find unnatural, and both the thought and the sensation of hitting fingertips against a surface that neither moves nor flexes to the touch is distracting and has often caused users to decrease the rate at which they enter data through such keyboards. As a result, keyboards providing tactile feedback are widely favored over those that do not.

One effort to combine the tactile feedback of a mechanical keyboard with some degree of relabeling of the keys was a game console attachment that provided a small keypad with actuatable rubber keys over which could be positioned different cardboard overlay sheets with different combinations of key labels. Although this permitted the functions of the keys to be changed, it required the user of the keypad to go through the cumbersome process of removing one cardboard overlay sheet and installing another.

Another effort to combine the tactile feedback of a mechanical keyboard with some degree of relabeling of the keys is embodied in various proposals to build a miniature graphical display into each keycap of each mechanical key. Each miniature graphical display in each keycap allows an alterable graphical legend to be displayed by each key, thereby overcoming the limitations of printed legends. However, the expense of providing each keycap with a miniature graphical display is considerable, and this approach still lacks the flexibility of redefining the shape and size of each key as is possible with a touchscreen.

### BRIEF DESCRIPTION OF THE DRAWINGS

A full understanding of the disclosed and claimed concept can be gained from the following Description when read in conjunction with the accompanying drawings in which:

Figure 1 is an exploded perspective view of an electronic device in accordance with the disclosed and claimed concept;

Figure 2 is a schematic depiction of an embodiment of the electronic device of Figure 1;

Figure 3 presents elevational views of a key module and overlying display module in accordance with the disclosed and claimed concept;

Figures 4a and 4b present edge-on views of a key module and overlying display module in which a virtual key is actuated in accordance with the disclosed and claimed concept;

Figures 5a and 5b present more edge-on views of a key module and overlying display module in which a virtual key is actuated in accordance with the disclosed and claimed concept;

Figures 6a and 6b present still more edge-on views of a key module and overlying display module in which a virtual key is actuated in accordance with the disclosed and claimed concept; and

Figure 7 is a flowchart of an embodiment of virtual key display and receipt of input.

Similar numerals refer to similar parts throughout the specification.

### DESCRIPTION

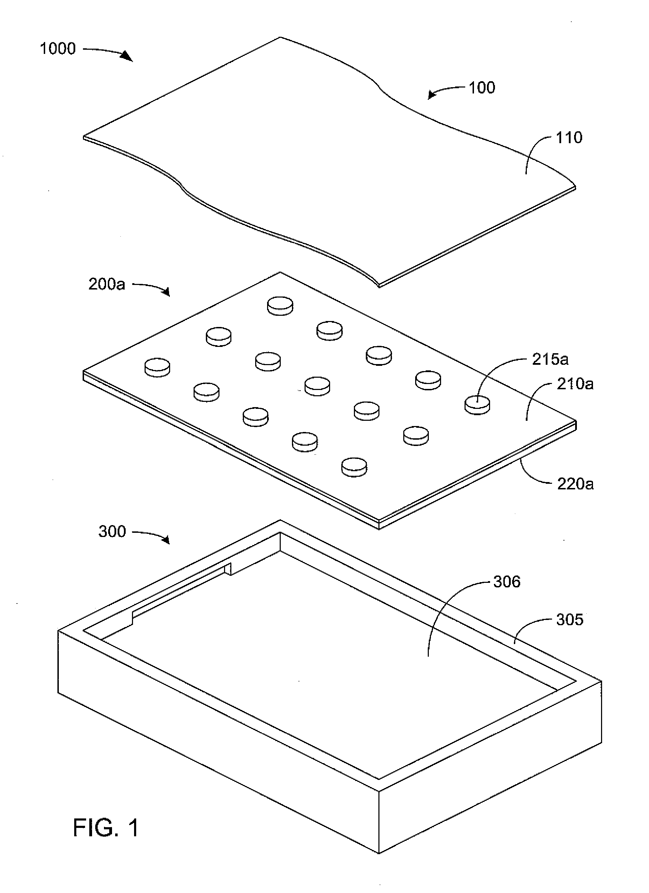

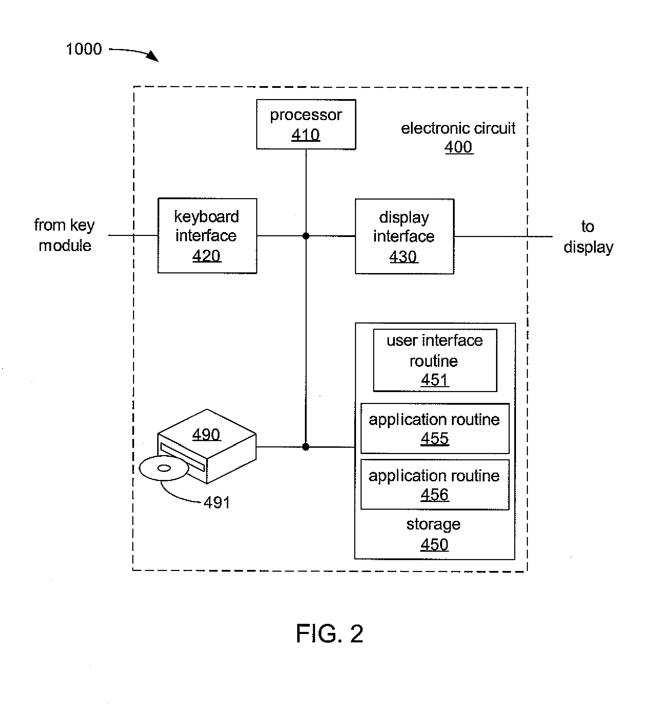

Figures 1 and 2, taken together, present both an exploded perspective view and a schematic view of portions of an electronic device 1000. The electronic device 1000 may be any of a wide variety of types of electronic device including, but not limited to, a computer, an electronic word processor, a handheld personal data assistant (PDA), a cell phone, an industrial process control device, an public internet kiosk, a data entry station, a label printing device, an automobile engine analyzer, a pocket calculator, or patient diagnostic device. The electronic device 1000 incorporates a casing 300 on which are disposed a display module 100, a key module 200a, and an electronic circuit 400. As will be explained in greater detail, the display module 100 overlies the key module 200a, and the electronic circuit 400 produces output signals enabling the display module 100 to depict indications representative of virtual keys that overlie keys 215a of the key module 200a to provide virtual keys that provide tactile feedback to a user of the electronic device 1000 when actuated.

The display module 100 is a flexible graphics display device that is of a generally sheet-like shape, and generally known as "electronic paper" ("E-paper") based on various technologies such as those developed by either the Palo Alto Research Center (a subsidiary of Xerox Corporation) or the Massachusetts Institute of Technology Media Lab. Described simply, the functionality of E-paper is very much like a liquid crystal display (LCD) with the exception of being flexible, rather than rigid, because each of the various forms of E-paper are made with a flexible plastic structure in place of the inflexible glass structure commonly used with LCD displays. There are other aspects of the operation of E-paper that differ from an LCD, including the manner in which E-paper is controlled to produce graphical images, but for purposes of this disclosure, a particularly significant characteristic of E-paper is its flexibility. The display module 100 has a display surface 110, and graphical images (including the virtual keys to be discussed in greater detail) may be viewed by a user of the electronic device 1000 by viewing the display surface 110.

The exemplary key module 200a is a widely known and used form of flexible keypad employing a sheet 210a of rubber or flexible plastic on which multiple physical keys 215a have been formed, and which overlies a substrate 220a. In some embodiments, each physical key 215a carries a conductive disk (not shown) that is disposed within that is placed into electrical contact with stationary contacts (not shown) disposed on the substrate 220a. However, as those skilled in the art of keypad design will readily recognize, and as will be made more apparent, the key module 200a may be based on any of a wide variety of technologies that provide keys having an extent of travel upon actuation by a finger of a user of the electronic device 1000. Advantageously, a physical key 215a provides a tactually detectable event, i.e., a tactile feedback, to a user when the physical key 215a is moved between an unactuated position and an actuated position. Such a tactile feedback could be in the nature of, for instance, a click or a tap sensation, or a slight acceleration of at least a portion of the electronic device 1000.

The casing 300 may be of any of a wide variety of configurations and materials. As presented in Figure 1, the casing 300 incorporates a face 305 into which is formed a generally dish-shaped formation 306 into which the key module 200a may be disposed, over which is disposed the display module 100 with the display surface 100 facing away from the key module 200a. Although the configurations of the display module 100, the key module 200a and the casing 300 may be suggestive of a handheld-sized form for the electronic device 1000, the aforedescribed wide variety of possible forms of the electronic device 1000 makes clear that the display 100, the key module 200 and the casing 300 may each be of any of a wide variety of shapes and/or sizes. Furthermore, although a dish-shaped formation 306 may be depicted as the manner in which the display module 100 and the key module 200a are disposed upon the casing 300, those skilled in the art will readily recognize that any of a wide variety of other fastening techniques may be employed.

The electronic circuit 400 interacts with the user of the electronic device 1000 through the combination of the display module 100 and the key module 200a. The electronic circuit 400 incorporates a processor 410, a keyboard interface 420, a display interface 430, and a storage 450. The processor 410 and the storage 450 together comprise a processor apparatus. The electronic circuit 400 may further incorporate a media storage device 490. As those skilled in the art will readily understand, the processor 410, the keyboard interface 420, the display interface 430, and the storage 450 may be interconnected by any of a wide variety of possible bus architectures and interconnection topologies enabling the interchange of addresses, commands and/or data therebetween. In some embodiments of the electronic device 1000, the entirety of the electronic circuit 400 is disposed upon the casing 300, while in other embodiments of the electronic device 1000, at least a portion of the electronic circuit 400 may be disposed upon another housing (not shown).

The processor 410 may be of any of a variety of forms of processing device including, but not limited to, a specialized processor such as a digital signal processor (DSP), a microcontroller, a general purpose microprocessor, or other form of processing device capable of executing a sequence of instructions. The keyboard interface 420 is coupled to a key module, such as the key module 200a, to receive input therefrom and to provide data representative of that input to the processor 410. The display interface 430 is coupled to the display module 100 to enable the outputting of various graphical images, including virtual keys. Given the touchscreen functionality provided by the combination of the display module 100 and the key module 200a, in some embodiments, the keyboard interface 420 and the display interface 430 may be combined in various ways known to those skilled in the art so as to enhance efficiency and/or functionality.

The storage 450 may be based on any of a variety of data storage technologies including, but not limited to, ROM, EPROM, FLASH, SRAM, DRAM, PRAM, magnetic core, etc. Where the processor 410 is a microcontroller or processing portion of a larger integrated circuit, the processor 410 and the storage 450 may be combined in ways that will be familiar to those skilled in the art. The media storage device 490, if present, may be based on any of a variety of data storage technologies including, but not limited to, ROM, EPROM, FLASH, magnetic, optical, magnetooptical, etc., and may employ either a removable form of storage media (e.g., using removable media such as storage media 491) or a nonremovable form of storage media (e.g., a hard disk).

Stored within the storage 450 are a number of routines are executable on the processor 410 and that comprise at least a user interface routine 451 along with one or more of application routines 455 and 456. In some embodiments, the user interface routine 451 either is a component of or provides support for a control program or operating system (not shown) that coordinates the execution of sequences of instructions of the application routines 455 and 456. The application routines 455 and 456 may each be any of a variety of forms of software from a utility such as a photo viewer to a suite of office productivity software including word processor and spreadsheet software. Although it is commonplace for a user interface routine that would support a touchscreen or other similar input and output devices to be a piece of software separate from an application routine, and although the discussion of embodiments that follows presents such a configuration of software, those skilled in the art will readily recognize that one or more application routines (such as the application routines 455 and 456 or other application routines) may incorporate user interface routine functionality in other possible embodiments.

In embodiments that incorporate the media storage device 490, the storage medium 491 may contain a copy of or an update to the user interface routine 451, one or both of the application routines 455 and 456, or another piece of software incorporating a sequence of instructions which, when executed on the processor 410, control the depiction of virtual keys and the receipt of input from a user of the electronic device 1000 that will shortly be described. The storage medium 491 may be provided by a manufacturer or supplier of the electronic device 1000 as a backup copy of at least a portion of the contents of the storage 450. Alternatively, the storage media 491 may be employed by a user to archive a version of at least a portion of the contents of the storage 450.

The processor 410 accesses the memory 450 to read and then execute a sequence of instructions of the user interface routine 451. In executing such a sequence of instructions, the processor 410 is caused to operate the display interface 430 to produce one or more graphical images on the display module 100, including a graphical image that represents a virtual key that overlies at least one of the physical keys 215a of the key module 200a. Then, the processor 410 is caused to await receipt of an input from the key module 200a through the keyboard interface 420 indicating that a physical key 215a underlying the virtual key has been actuated, thereby indicating that a user of the electronic device has actuated the virtual key.

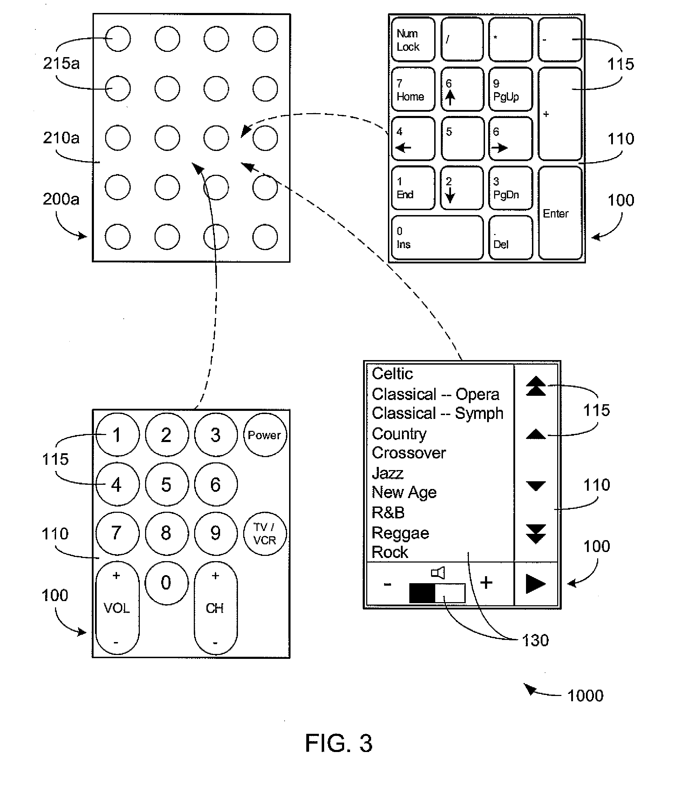

Figure 3 depicts the production and possible arrangement of graphical images representing virtual keys. An elevational view of the flexible sheet 210a of the key module 200a depicting the layout of multiple physical keys 215a on the flexible sheet 210a is shown. Also shown are three elevational views of the display face 110 of the display module 100 depicting varying forms of virtual keys 115 positioned on the display face 110 such that each one of the virtual keys 115 overlies at least one of the physical keys 215a. Although the various arrangements of virtual keys 115 depicted in Figure 3 are highly suggestive of a television remote control, a personal computer numeric keypad and a digital audio music player, as was previously discussed, the electronic device 1000 may be any of a number of possible varieties of electronic device serving any of a number of purposes. Therefore, it will be clear to those skilled in the art that a vast variety of arrangements of types of virtual keys 115 may be produced by the processor 410 on the display module 100.

In some embodiments, one or more data structures (not shown) that are stored within the storage 450 and that specify the graphical images and/or relative placement of the virtual keys 115 are retrieved and employed by the processor 410 to produce and position the virtual keys 115 on the display module 100. In some of these embodiments, the user interface routine 451 may incorporate one or more such data structures which are employed when virtual keys related to the functionality of the user interface routine 451 are to be displayed, while one or more of the application routines 455 and 456 each separately incorporate similar or different data structures for virtual keys related to their functionality. In others of these embodiments, the installation of one or both of the application routines 455 and 456 may entail providing such data structures related to each of the application routines 455 and 456 to the user interface routine 451 for storage in a predetermined portion of the storage 450 that is reserved for such data structures. Such data structures may also be used by the processor 410 and/or the keyboard interface 420 to map an indication of an actuation of a physical key 215a with the corresponding virtual key 115 in determining which of the virtual keys 115 is being actuated by a user of the electronic device 1000.

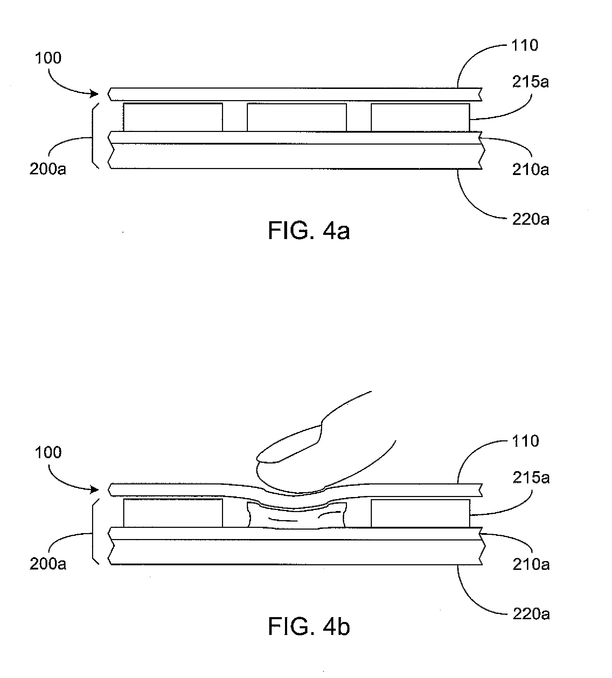

Figures 4a and 4b depict the physical act of a user of the electronic device 1000 actuating a virtual key. Two edge-on views of a portion of the key module 200a overlain with a portion of the display module 100 are presented. Figure 4a depicts exemplary relative spacing and location of these portions without action by the user actuating a virtual key. In Figure 4a, the portions of the key module 200a are in an undeflected position, and the correspondingly positioned underlying physical keys 215a are in an unactuated position. However, Figure 4b depicts a finger of the user applying an actuation force to the display face 110 of the display module 100 to move the portion of the display module 100 from the undeflected position to the deflected position as part of the act of the user actuating a virtual key. Such an actuation force has moved a portion of the key module 200a to its deflected position, which has resulted in the correspondingly positioned physical key 215a to be moved from the unactuated position to an actuated position. The resilient base material of the display module 100 flexes and gives way in response to the actuation force exerted by the user's finger, and thus transfers the actuation force to a correspondingly positioned physical key 215a that is overlain by the deflected portion of the display module 100. In response to this transferred actuation force, the physical key 215a travels toward the substrate 220a to its actuated position where electrical contacts or other mechanism carried by the substrate 220a complete an electrical circuit that includes the actuated physical key 215a and results in an input to the keyboard interface 420. When the actuation force is removed from the indicated portion of the key module 200a, the indicated physical key 215a moves from its actuated position back to its unactuated position. Advantageously, movement of the physical key 215a between the unactuated and actuated positions provides to a user a tactually detectable event, i.e., a tactile feedback.

As has been described, and as is shown in Figure 3, a virtual key 115 may overlie one or more of the physical keys 215a. The combination of a virtual key 115 and the physical keys 215a which it overlies can be referred to as a key assembly. Where a given virtual key 115 overlies a plurality of physical keys 215a, a user of the electronic device 1000 may actuate the given virtual key 115 by causing any one or more of the physical keys 215a that underlie the given virtual key 115 to be moved to their actuated positions. In such a situation, the processor 410 is caused by the user interface routine 451 to treat an actuation of any or all of the physical keys 215a underlying the given virtual key 115 as being a single actuation of that given virtual key 115. As is also shown in Figure 3, not all of the graphical images produced on the display module need be virtual keys. Images showing text and/or graphical symbols (such as graphical image 130), along with motion video and/or other visual imagery may be shown alongside or among graphical images representing virtual keys.

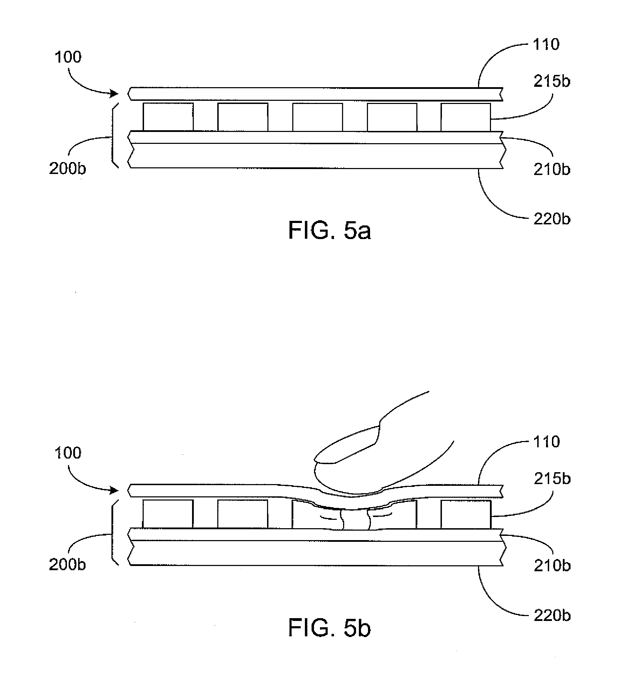

Figures 5a and 5b depict the physical act of a user of the electronic device 1000 having the display module 100 and an alternate key module 200b actuating a virtual key. Two edge-on views of a portion of the key module 200b overlain with a portion of the display module 100 are presented. Figure 5a depicts relative spacing and location without action by the user actuating a virtual key, and Figure 5b depicts a finger of the user applying an actuation force to the display face 110 of the display module 100 to move the portion of the display module 100 from the undeflected position to the deflected position as part of the act of the user actuating a virtual key underneath the user's finger. As in Figure 4b, the flexible base material of the display module 100 flexes and moves from its undeflected position to a deflected position in response to the actuation force exerted by the user's finger. However, unlike Figure 4b, the actuation force is transferred to a plurality of physical keys 215b of the flexible sheet 210b of the key module 200b. In response to this transferred actuation force, the actuated physical keys 215b are moved toward their actuated positions where they engage a substrate 220b where electrical contacts or other mechanism carried by the substrate 220b complete one or more circuits that include one or more of the actuated physical keys 215b, and an input to the keyboard interface 420 results.

When the actuation force is removed from the indicated portion of the key module 200b, the indicated physical keys 215b move from their actuated positions back to their unactuated positions. Movement of either or both of the physical keys 215b between the unactuated and actuated positions provides to a user a tactually detectable event, i.e., a tactile feedback. That is, the physical keys 215b may be advantageously configured such that only a single physical key 215b of each adjacent plurality thereof provides a tactile feedback in moving between its unactuated and actuated positions. This would enable an actuation force applied to or removed from an adjacent plurality of physical keys 215b to result in a single tactile feedback rather than a plurality of tactile feedback sensations. Such a configuration would provide a consistent tactile feedback, i.e., a single tactile feedback sensation, regardless of whether a single physical key 215b is moved between its actuated and unactuated positions, or whether an adjacent plurality of such physical keys 215b are moved between their actuated and unactuated positions.

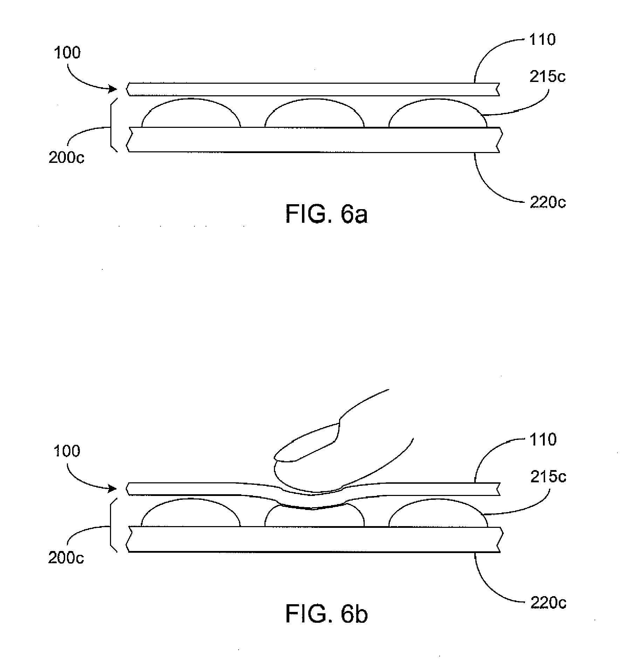

Figures 6a and 6b depict the physical act of a user of the electronic device 1000 having the display module 100 and another alternate key module 200c actuating a virtual key. Two edge-on views of a portion of the key module 200c overlain with a portion of the display module 100 are presented. Figure 6a depicts relative spacing and location without action by the user actuating a virtual key, and Figure 6b depicts a finger of the user applying an actuation force to the display face 110 of the display module 100 to move the portion of the display module 100 from the undeflected position to the deflected position as part of the act of the user actuating a virtual key underneath the finger. As in Figures 4b and 5b, the flexible base material of the display module 100 flexes and moves from its undeflected position to its deflected position in response to the actuation force exerted by the user's finger. However, unlike Figures 4b and 5b, the actuation force is transferred to the soft metal dome of one of the physical keys 215c disposed on the substrate 220c of the key module 200c. In response to this transferred actuation force, the actuated physical key 215c comprises a soft metal dome that is collapsed from an unactuated position towards the substrate 220c to an actuated position where electrical contacts are bridged by a portion of the soft metal dome, and an input to the keyboard interface 420 results. When the actuation force is removed from the indicated portion of the key module 200c, the indicated physical key 215c moves from its actuated position back to its unactuated position, and the soft metal dome returns from its collapsed position to its uncollapsed position. Advantageously, movement of the physical key 215c between the unactuated and actuated positions and, more specifically, corresponding movement of the soft metal dome between the uncollapsed and collapsed positions, provides to a user a tactually detectable event, i.e., a tactile feedback.

A comparison of Figures 4b and 5b reveals that the physical keys 215a of the key module 200a are larger, less numerous and less densely arranged than the physical keys 215b of the key module 200b. The smaller, more numerous and more densely arranged physical keys 215b allow greater flexibility in creating virtual keys of different sizes and shapes by providing a finer degree of granularity. It should be noted that although the larger physical keys 215a and the smaller physical keys 215b have been shown and discussed as being part of separate key modules (i.e., key modules 200a and 200b, respectively), those skilled in the art will recognize that combinations of larger and smaller physical keys may be incorporated into the same key module in some embodiments. It should also be noted that although the exemplary physical keys 215a and 215b which are based on bumps or domes formed in the flexible sheets 210a and 210b, respectively, and the exemplary physical keys 215c which are based on soft metal domes have been shown and discussed as being part of separate key modules, those skilled in the art will recognize that combinations of physical keys employing differing structures may be incorporated into the same key module in some embodiments.

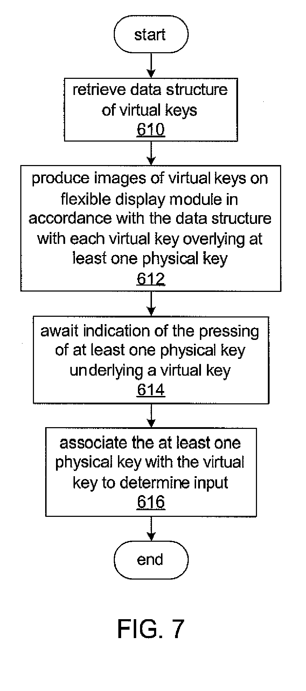

Figure 7 is a flowchart of the placement of virtual keys on a display module and of the receipt of input from a key module as a user of the electronic device on which the virtual keys are displayed actuates a given one of the virtual keys. At 610, one or more data structures specifying the shape, size, graphical imagery, and/or relative placement of various virtual keys are retrieved. At 620, the information provided by the data structures are used to produce images of the virtual keys 115 on a flexible display module 100 overlying a key module 200 having a set of physical keys 215, with each virtual key 115 being depicted on a portion of the display module 100 disposed at a location that overlies at least one of the physical keys 125. At 614, an indication that at least one physical key 125 underlying a virtual key 115 has been actuated is awaited. At 616, and in response to a detection of an actuation of a physical key 125, the association between the actuated physical key 125 and a corresponding virtual key 115 is employed to identify the virtual key that the user actuated.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof. Moreover, it is noted that the elements described herein can be assembled or arranged in any combination without departing from the present concept.

### Reference Listing:

| | |
|---|---|
| display module | 100 |
| display face | 110 |
| virtual keys | 115 |
| graphical images | 130 |
| key module | 200a |
| key module | 200b |
| key module | 200c |
| flexible sheet | 210a |
| flexible sheet | 210b |
| physical key | 215a |
| physical key | 215b |
| physical key | 215c |
| substrate | 220a |
| substrate | 220b |
| substrate | 220c |
| casing | 300 |
| face | 305 |
| dish-shaped formation | 306 |
| electronic circuit | 400 |
| processor | 410 |
| keyboard interface | 420 |
| display interface | 430 |
| storage | 450 |
| user interface routine | 451 |
| application | 455 |
| application | 456 |
| media storage device | 490 |
| storage medium | 491 |
| step | 610 |
| step | 612 |
| step | 614 |
| step | 616 |
| electronic device | 1000 |

## Claims

1. An electronic device comprising:
a processor apparatus comprising a processor and a storage having stored therein a number of routines executable on the processor;
a key module having at least one physical key movable between an unactuated position and an actuated position, the at least one physical key in the actuated position being structured to provide a predetermined input to the processor;
a flexible display module at least partially overlying at least a portion of the key module and being structured to receive output signals from the processor and to responsively depict a virtual key on a portion of the flexible display module disposed at a location overlying the at least one physical key, the portion of the flexible display module being movable between an undeflected position and a deflected position responsive to an actuation force being applied to and removed from the portion of the flexible display module;
the at least one physical key being in the unactuated position when the portion of the flexible display module is in the undeflected position; and
the at least one physical key being in the actuated position when the portion of the flexible display module is in the deflected position.

2. The electronic device of Claim 1 wherein the at least one physical key comprises one of a physical key formed in a flexible sheet overlying a substrate, a soft metal dome key, and a mechanical key.

3. The electronic device of Claim 1 wherein execution of at least a first routine on the processor causes the electronic device to perform operation comprising retrieving a data structure having information concerning the virtual key.

4. The electronic device of Claim 3 wherein the data structure specifies at least one of a shape of the virtual key, a size of the virtual key, a position of the virtual key relative to another virtual key, a graphical image of the virtual key, and a portion of text of the virtual key.

5. The electronic device of Claim 3 wherein the data structure is associated with an application routine, and wherein the virtual key is related to a function of the application routine.

6. The electronic device of Claim 1 wherein execution of at least a first routine on the processor causes the electronic device to perform operation comprising depicting on the display module the virtual key and a graphical image unrelated to any virtual key.

7. The electronic device of Claim 1 wherein execution of at least a first routine on the processor causes the electronic device to perform operation comprising detecting the predetermined input to the processor, and identifying the virtual key as having been actuated.

8. The electronic device of Claim 7 wherein the operations further comprise retrieving a data structure having information mapping the virtual key to the at least one physical key.

9. The electronic device of Claim 1 wherein the virtual key is at least one of a text data entry key and a numeric data entry key.

10. The electronic device of Claim 1 wherein movement of the at least one physical key between the unactuated position and the actuated position results in the generation of a tactile feedback that is detectable by a user.

11. A method of enabling input on an electronic device having a processor apparatus that comprises a processor and a storage having stored therein a number of routines executable on the processor, the method comprising:
providing a key module having at least one physical key movable between an unactuated position and an actuated position, the at least one physical key in the actuated position being structured to provide a predetermined input to the processor;
providing a flexible display module at least partially overlying at least a portion of the key module and being structured to receive output signals from the processor and to responsively depict a virtual key on a portion of the flexible display module disposed at a location overlying the at least one physical key, the portion of the flexible display module being movable between an undeflected position and a deflected position responsive to an actuation force being applied to and removed from the portion of the flexible display module, the at least one physical key being in the unactuated position when the portion of the flexible display module is in the undeflected position, and the at least one physical key being in the actuated position when the portion of the flexible display module is in the deflected position; and
upon movement of the at least one physical key between the unactuated position and the actuated position, generating a tactile feedback that is tactually detectable by a user of the electronic device.

12. The method of Claim 11, further comprising:
providing a dome that is movable between an uncollapsed position and a collapsed position when the at least one physical key moves between the unactuated position and the actuated position; and
employing the movement of dome between the uncollapsed position and the collapsed position to generate the tactile feedback.

## Amended claims

### Amended claims in accordance with Rule 137(2) EPC.

**1.** An electronic device (1000) comprising:
a processor apparatus comprising a processor (410) and a storage (450) configured for storing therein a number of routines (451, 455, 456) executable on the processor and a number of data structures for retrieval and employment by the processor to produce and position a number of virtual keys (115), at least some of the data structures each specifying at least one of a shape of a virtual key, a size of the virtual key, a position of the virtual key relative to another virtual key, a graphical image of the virtual key, and a portion of text of the virtual key;
a key module (200a, 200b, 200c) having at least one physical key (215a, 215b, 215c) movable between an unactuated position and an actuated position, the at least one physical key in the actuated position being structured to provide a predetermined input to the processor;
a flexible display module (100) at least partially overlying at least a portion of the key module and being structured to receive output signals from the processor and to responsively depict a virtual key of the number of virtual keys on a portion of the flexible display module disposed at a location overlying the at least one physical key, the portion of the flexible display module being movable between an undeflected position and a deflected position responsive to an actuation force being applied to and removed from the portion of the flexible display module;
the device being configured for the at least one physical key to be in the unactuated position when the portion of the flexible display module is in the undeflected position; and
for the at least one physical key to be in the actuated position when the portion of the flexible display module is in the deflected position.

**2.** The electronic device of Claim 1 configured for one or more of the number of routines to incorporate one or more of the number of data structures.

**3.** The electronic device of Claim 1 wherein the at least one physical key comprises one of a physical key formed in a flexible sheet (210a, 210b) overlying a substrate (220a, 220b, 220c), a soft metal dome key (215c), and a mechanical key.

**4.** The electronic device of Claim 1 configured to associate the data structure with an application routine, and wherein the virtual key is related to a function of the application routine.

**5.** The electronic device of Claim 1 wherein execution of at least a first routine on the processor causes the electronic device to perform operation comprising depicting on the display module the virtual key and a graphical image unrelated to any virtual key.

**6.** The electronic device of Claim 1 wherein execution of at least a first routine on the processor causes the electronic device to perform operation comprising detecting the predetermined input to the processor, and identifying the virtual key as having been actuated.

**7.** The electronic device of Claim 6 wherein the operations further comprise retrieving a data structure having information mapping the virtual key to the at least one physical key.

**8.** The electronic device of Claim 1 wherein the virtual key is at least one of a text data entry key and a numeric data entry key.

**9.** The electronic device of Claim 1 configured so that movement of the at least one physical key between the unactuated position and the actuated position results in the generation of a tactile feedback that is detectable by a user.

**10.** A method of enabling input on an electronic device (1000) having a processor apparatus that comprises a processor (410) and a storage (450) having stored therein a number of routines executable on the processor, the method comprising:
providing a number of data structures retrievable and employable by the processor to produce and position a number of virtual keys (115), at least some of the data structures each specifying at least one of a shape of a virtual key, a size of the virtual key, a position of the virtual key relative to another virtual key, a graphical image of the virtual key, and a portion of text of the virtual key
providing a key module (200a, 200b, 200c) having at least one physical key (215a, 215b, 215c) movable between an unactuated position and an actuated position, the at least one physical key in the actuated position being structured to provide a predetermined input to the processor;
providing a flexible display module (100) at least partially overlying at least a portion of the key module and being structured to receive output signals from the processor and to responsively depict a virtual key of the number of virtual keys on a portion of the flexible display module disposed at a location overlying the at least one physical key, the portion of the flexible display module being movable between an undeflected position and a deflected position responsive to an actuation force being applied to and removed from the portion of the flexible display module, the at least one physical key being in the unactuated position when the portion of the flexible display module is in the undeflected position, and the at least one physical key being in the actuated position when the portion of the flexible display module is in the deflected position; and
upon movement of the at least one physical key between the unactuated position and the actuated position, generating a tactile feedback that is tactually detectable by a user of the electronic device.

**11.** The method of Claim 11 wherein providing the number of data structures comprises incorporating one or more of the number of data structures in one or more of the routines.

**12.** The method of Claim 10, further comprising:
providing a dome (215c) that is movable between an uncollapsed position and a collapsed position when the at least one physical key moves between the unactuated position and the actuated position; and
employing the movement of dome between the uncollapsed position and the collapsed position to generate the tactile feedback.
